# EUROPÄISCHE PATENTANMELDUNG

(11) **EP 0 959 264 A2**
(43) Veröffentlichungstag der Anmeldung: **24.11.1999**
(21) Anmeldenummer: 99105803.3
(22) Anmeldetag: 23.03.1999
(51) Int. Cl.: F16F 9/36

(54) **Hydraulischer Schwingungsdämpfer und Verfahren zum Zusammenbau eines derartigen Schwingungsdämpfers**

(30) Priorität: 22.05.1998 DE 19823024
(71) Anmelder: Krupp Bilstein GmbH, 58256 Ennepetal (DE)
(72) Erfinder: Schmidt, Johann, 58300 Wetter (DE); Wach, Reinhold, 58256 Ennepetal (DE)

(57) **Zusammenfassung**

Um einen hydraulischen Schwingungsdämpfer für Kraftfahrzeuge mit einem Dämpfungsflüssigkeit enthaltenden und alternativ zusätzlich einen mit Gas gefüllten und mittels eines Trennkolbens (8) abgetrennten Ausgleichsraum (7) enthaltenden Außenzylinder (2), in dem direkt oder in einem innenliegenden Dämpferzylinder ein Dämpferkolben (4) axial gleitend geführt ist, mit einer dem Dämpferkolben (4) tragenden und axial bewegenden Kolbenstange (3), die sich durch ein axial offenes Ende (17) des Außenzylinders (2) nach außen erstreckt und mit einem den Außenzylinder (2) gegenüber der Kolbenstange (3) gleitend verschließenden Dichtungs- und Führungspaket (11), wobei das Dichtungs- und Führungspaket (11) sich axial nach außen gegen einen in einer Nut (14) des Außenzylinders (2) liegenden Federring (12) abstützt, derartig zu gestalten, daß die Montage sich wesentlich vereinfacht, ist die den außenliegenden Federring (12) aufnehmende radial im Außenzylinder (2) angeordnete Nut (14) axial zum Ende (17) des Außen-zylinders (2) hin entsprechend der Form des Federringes (12) ausgebildet und verjüngt sich in entgegengesetzter axialer Richtung konusartig zum Innenmantel (9) des Außenzylinders (2) hin. Zum Zusammenbau eines derartigen Schwingungs-dämpfers wird auf die Öffnung des Außenzylinders (2) ein Oberwerkzeug (18) zur Aufnahme und zum Halten der Einbauteile aufgesetzt, wobei Vorrichtungen und Maschinen zum Einfüllen von Gas und/oder Dämpfungsflüssigkeit und ein Stempel (19) zum Einpressen der Einbauteile mit dem Oberwerkzeug (18) zusammenwirken. Nach oder während dem Füllen des Außenzylinders (2) mit Dämpfungsflüssigkeit werden sämtliche Einbauteile einschließlich des Dämpfungskolbens (4) und der Federringe (12, 13) in den Außenzylinder (2) und/oder den Dämpferzylinder eingeschoben.

## Beschreibung

Die Erfindung betrifft einen hydraulischen Schwingungsdämpfer nach dem Oberbegriff des Anspruchs 1.

Bei hydraulischen Schwingungsdämpfern, seien es Einrohr- oder Zweirohr-Schwingungsdämpfer, ist es erforderlich, neben dem Einbau der Einbauteile die Schwingungsdämpfer auch mit Dämpfungsflüssigkeit zu füllen sowie bei Einrohr-Schwingungsdämpfern jenseits des Trennkolbens einen Ausgleichsraum mit Gas zu füllen. Weiterhin muß austrittsseitig an einem Ende die oszillierende Kolbenstange abgedichtet und geführt werden. Von daher ist hier ein geeignetes Dichtungs- und Führungspaket einzusetzen.

Die DE-PS 1 057 403 befaßt sich ausführlich mit den vorher beschriebenen Problemen. Hier wird, wie beim Erfindungsgegenstand, das Dichtungs- und Führungspaket mittels zweier Federringe, die in Nuten des Außenzylinders eingreifen, axial gehalten. Eine andere Art der Ausbildung des Dichtungs- und Führungspakets ist aus "Reimpell, Stoll, Fahrwerktechnik: Stoß- und Schwingungsdämpfer, Vogel Buchverlag Würzburg 1989" bekannt. Bild 2.22, Seite 43, zeigt ein Dichtungs- und Führungspaket, das sich ebenfalls durch zwei in den Außenzylinder eingreifende Federringe axial abstützt. Eine in eine Nut des Dichtungs- und Führungspakets eingelegte, radial vorgespannte Dichtung übernimmt die radiale Abdichtung zwischen Dichtungs- und Führungspaket und Außenzylinder. Insbesondere die Montage von Einrohr-Schwingungsdämpfern, bei denen ein mit Gas gefüllter, gegenüber dem übrigen Innenvolumen abgetrennter Ausgleichsraum vorgesehen werden muß, gestaltet sich sehr aufwendig. Zur Montage und zum Füllen mit Gas und Dämpfungsflüssigkeit sind mehrere Montage- und Füllstationen erforderlich.

Der Erfindung liegt die Aufgabe zugrunde, gattungsgemäße hydraulische Schwingungsdämpfer derartig zu gestalten, daß die Montage sich wesentlich vereinfacht und ein Verfahren zum Zusammenbau eines derartigen Schwingungsdämpfers zu finden, das die vorstehenden Bedingungen erfüllt. Diese Aufgabe wird erfindungsgemäß durch einen hydraulischen Schwingungsdämpfer mit den Merkmalen des Anspruchs 1 gelöst. Vorteilhafte Aus- und Weiterbildungen sind in den Ansprüchen 2 bis 6 beschrieben. Anspruch 7 beschreibt ein erfindungsgemäßes Verfahren zum Zusammenbau eines gattungsgemäßen Schwingungsdämpfers und Anspruch 8 beschreibt ein vorteilhaftes Verfahren.

Die mit der Erfindung erzielten Vorteile bestehen insbesondere darin, daß für den Einbau sämtlicher beweglicher und abdichtender Einbauteile sowie auch für das Befüllen mit Dämpfungsflüssigkeit und alternativ mit Gas nur eine Arbeitsstation an einer kombinierten Arbeits- und Füllmaschine erforderlich ist. Darüber hinaus wird die Gefahr der Zerstörung von Einbauteilen während der Montage wesentlich reduziert.

Ein Ausführungsbeispiel der Erfindung ist in der Zeichnung dargestellt und wird im folgenden näher beschrieben. Es zeigen
- Fig. 1: einen Schnitt durch einen Einrohr-Schwingungsdämpfer und
- Fig. 2: eine vergrößerte Darstellung des Schwingungsdämpfers im Bereich des Dichtungs- und Führungspakets.

Hydraulische Schwingungsdämpfer werden zusammenwirkend mit Federn zur federnden und dämpfenden Aufhängung der Räder gegenüber dem Fahrzeug bei Kraftfahrzeugen eingesetzt. Ihre Anbindung an der Radaufhängung und am Fahrzeugaufbau erfolgt über Anschlagteile 1. Im Ausführungsbeispiel ist nur das Anschlagteil 1, das am Ende des Außenzylinders 2 angebracht ist, dargestellt. Ein weiteres Anschlagteil ist üblicherweise am Ende der Kolbenstange 3 vorgesehen. Am in den Außenzylinder 2 eintauchenden Ende der Kolbenstange 3 ist ein Dämpferkolben 4 befestigt. Dieser Dämpferkolben 4 trennt den mit Dämpfungsflüssigkeit gefüllten Innenraum des Außenzylinders 2 in zwei Arbeitsräume 5, 6. Geeignete, nicht näher dargestellte Ventile am Dämpferkolben 4 bewirken die Dämpfung der oszillierenden Bewegung des an der Kolbenstange 3 angebundenen Dämpferkolbens 4. Zum Ausgleich des Verdrängungsvolumens der mehr oder minder eintauchenden Kolbenstange 3 ist bei Einrohr-Schwingungsdämpfern ein Ausgleichsraum 7 vorgesehen, der mit Gas gefüllt ist. Dieser gasgefüllte Ausgleichsraum 7 wird gegenüber den mit Dämpfungsflüssigkeit gefüllten Arbeitsräumen 5 und 6 über einen axial verschieblichen Trennkolben 8 abgetrennt. Der Trennkolben 8 ist an seinem Außenumfang mit einer Radialdichtung ausgebildet, die die Abdichtung gegen den Innenmantel 9 des Außenzylinders 2 bewirkt.

Der Außenzylinder 2 ist mit einem Boden 10 und einem offenen Ende ausgebildet. An den Boden 10 des Außenzylinders 2 schließt sich das Anschlagteil 1 an. In die Öffnung des Außenzylinders 2 taucht oszillierend die Kolbenstange 3 ein, die an ihrem eintauchenden Ende den Dämpferkolben 4 trägt. Ein Dichtungs- und Führungspaket 11 dient zum radialen gleitenden Führen der Kolbenstange 3 und zum Abdichten des mit Dämpfungsflüssigkeit gefüllten Arbeitsraums 5 nach außen. Dabei ist zu berücksichtigen, daß die gegenüber dem Dichtungs- und Führungspaket 11 oszillierende Kolbenstange 3 ausreichend geschmiert werden muß, aber ein möglichst geringer Verlust an Arbeitsflüssigkeit nach außen vorgesehen sein soll, um eine lange Lebensdauer für den Schwingungsdämpfer zu erzielen.

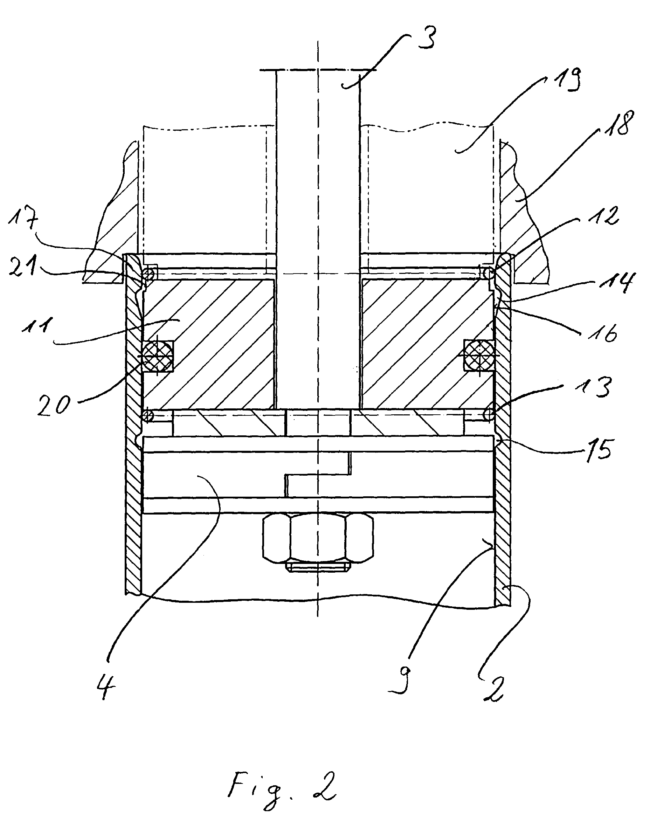

Fig. 2 zeigt eine vergrößerte Darstellung des Bereichs Dichtungs- und Führungspaket 11 am Schwingungsdämpfer. Dabei ist die Darstellung so gewählt, daß das Dichtungs- und Führungspaket 11 während des Zusammenbaus noch nicht seine endgültige Montagelage eingenommen hat. Das Dichtungs- und Führungspaket 11 wird in axialer Richtung gegenüber dem Außenzylinder 2 über zwei Federringe 12, 13 gehalten, die in zwei in den Innenmantel 9 des Außenzylinders 2 eingebrachte Nuten 14, 15 eingreifen und den Außenmantel 16 des Dichtungs- und Führungspakets 11 nach innen übergreifen. Die Federringe 12, 13 haben am Umfang eine Trennstelle, damit sie radial nach innen zusammengeschoben werden können und weisen einen kreisförmigen Querschnitt auf Die gegenüber dem Dichtungs- und Führungspaket 11 in den Innenmantel 9 des Außenzylinders 2 eingebrachte Nut 15 zur Aufnahme des innenliegenden Federrings 13 ist etwa halbkreisförmig eingebracht. Bei endgültiger Lage des Federrings 13 liegt dieser somit etwa zur Hälfte seines Querschnitts in dieser Nut 15 und übergreift den Außenmantel 16 des Dichtungs- und Führungspakets 11 somit etwa zur Hälfte seines Querschnitts. Die Nut 14 zur Aufnahme des außenliegenden Federrings 12 ist so ausgebildet, daß sie zum Ende 17 des Außenzylinders 2 hin ebenfalls kreisförmig entsprechend der Form des Federrings 12 ausgebildet ist, wobei sie etwa die Form eines Viertelkreises bildet. In der axial entgegengesetzten Richtung verjüngt sich die Nut 14 jedoch etwa konusartig hin zum Innenmantel 9 des Außenzylinders 2. Diese Form der äußeren Nut 14 bringt wesentliche Vorteile für die gesamte Montage des Schwingungsdämpfers. Auch die innere Nut 15 kann, wenn es sinnvoll ist, mit dieser Form ausgebildet werden.

Für die Montage eines Einrohr-Schwingungsdämpfers entsprechend dem Ausführungsbeispiel wird der Außenzylinder 2 völlig leer in die Montagevorrichtung oder Montagemaschine eingebracht. Sämtliche Einbauteile liegen im Oberwerkzeug 18, das sich auf dem Ende 17 des Außenzylinders 2 radial und axial geführt abstützt. Oberhalb sämtlicher Einbauteile ist ein Stempel 19 vorgesehen, der die Einbauteile nacheinander in den Innenraum des Außenzylinders 2 schieben kann. Durch nicht dargestellte Füllkanäle, die im Oberwerkzeug 18 unterhalb des eingelegten Trennkolbens 8 münden, wird eingangs der Außenzylinder 2 mit Gas gefüllt. Danach erfolgt durch oberhalb des Trennkolbens 8 mündende Füllkanäle die vollständige Füllung des Außenzylinders 2 mit Arbeitsflüssigkeit. Hierbei kann der Trennkolben 8 bereits durch die Arbeitsflüssigkeit in den Außenzylinder 2 gedrückt werden. Nachdem der Arbeitsraum vollständig mit Arbeitsflüssigkeit gefüllt ist, schiebt der Stempel 19 die übrigen sich noch im Oberwerkzeug 18 befindlichen Einbauteile in den Innenmantel 9 des Außenzylinders 2, wobei entsprechend seiner Funktion der Dämpferkolben 4 als erstes eingebracht ist.

Wie aus Fig. 2 ersichtlich, liegt unterhalb des Dichtungs- und Führungspakets 11 ein Federring 13, der nach dem Dämpferkolben 4 als nächstes in den Innenmantel 9 des Außenzylinders 2 gelangt. Zum besseren Einführen speziell der Federringe 12, 13 ist das Ende 17 des Außenzylinders 2 an der Innenseite leicht konisch ausgebildet. Dadurch werden die Kräfte zum Zusammendrücken der Federringe 12,13 nicht unnötig hoch und auch ein Verquetschen sowohl des Endes 17 des Außenzylinders 2 als auch der Federringe 12, 13 wird vermieden. Die Federringe 12, 13 werden gemeinsam mit dem Dichtungs- und Führungspaket 11 eingedrückt. Von daher wird der innere Federring 13 mittels der Unterkante des Dichtungs- und Führungspakets 11 geschoben. Nachdem der innere Federring 13 in den Bereich der äußeren Nut 14 kommt, schnappt er nach außen. Da sich jedoch die Form dieser äußeren Nut 14 nach innen hin konusartig verjüngt, ist wiederum die erforderliche Kraft zum Zusammendrücken dieses Federrings 13 nicht so hoch, als daß irgendwelche Quetschungen und damit Zerstörungen von Nutkante, Federring 13 oder Nut 14 eintreten. Beim weiteren Einschieben der Bauteile liegt dann der innere Federring 13 wieder am Innenmantel 9 des Außenzylinders 2 an. Auch die radial vorgespannte Dichtung 20, die zum Abdichten des Dichtungs- und Führungspakets gegenüber dem Innenmantel 9 des Außenzylinders 2 eingesetzt wird, wird aufgrund der Form der äußeren Nut 14 beim Einsetzen wesentlich geschont. Die Gefahr einer Zerstörung dieser Dichtung 20 ist ebenfalls durch die Form der Nut 14 minimiert.

Am Ende des Montagevorganges schnappen die beiden zu diesem Zeitpunkt jeweils axial vor den äußeren Ringflächen des Dichtungs- und Führungspakets 11 liegenden Federringe 12, 13 etwa gleichzeitig in die zugehörigen Nuten 14, 15 ein. Von daher müssen die beiden Nuten 14, 15 einen Abstand voneinander aufweisen, der wenigstens der Höhe des Dichtungs- und Führungspakets 11 plus der Dicke eines der Federringe 14 oder 15 entspricht.

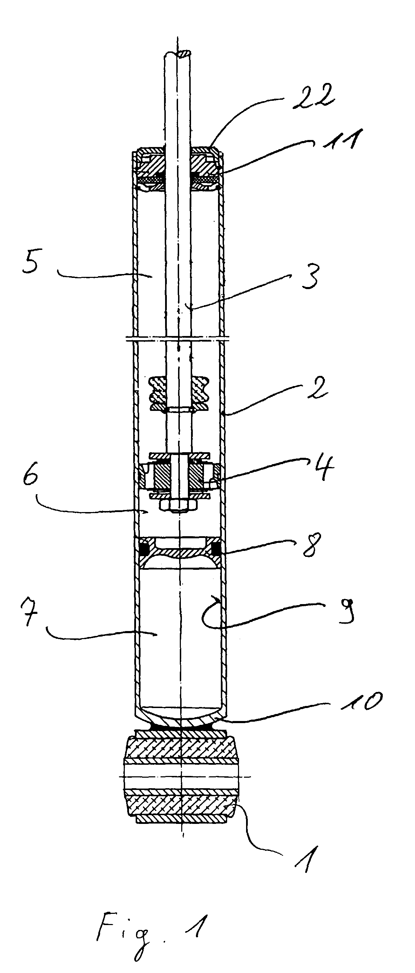

Um eine endgültige Sicherung des äußeren Federrings 12 zu erzielen, ist das äußere Ende des Dichtungs- und Führungspakets 11 mit einem radialen Rücksprung 21 ausgebildet, der etwa die halbe Dicke des äußeren Federrings 12 aufweist, so daß der äußere Federring 12, wenn er in der zugehörigen Nut 14 liegt, in den freien Durchmesser dieses Federrings 12 eingreifen kann. Dieses Eingreifen des Rücksprungs 21 in den äußeren Federring 12 erfolgt dadurch, daß durch den vom Gas aufgebauten Innendruck das Dichtungs- und Führungspaket 11 so weit nach außen geschoben wird, bis es sich mit seinem Rücksprung 21 radial gegen den Federring 12 abstützt, wobei der Rücksprung 21 sich dann bis in den Federring 12 erstreckt. Ein Lösen der Federringverbindung kann dann nur wieder durch ein Einschieben des Dichtungs- und Führungspakets 11 in den Außenzylinder 2 erfolgen, also nur durch Aufbringung einer äußeren Kraft in diesem Bereich. Um die Verschmutzungs- und Verletzungsgefahr zu reduzieren, kann, wie in Fig. 1 gezeigt, das offene Ende 17 des Außenzylinders 2 durch eine Dichtkappe 22 verschlossen werden.

Die Ausbildung der Fixierung des Dichtungs- und Führungspakets 11 am Außenzylinder 2 kann in entsprechender Weise auch für Zweirohr-Schwingungsdämpfer verwendet werden. Die Reihenfolge des Einführens der Einbauteile kann auch in anderer Weise wie vorbeschrieben erfolgen, insbesondere hinsichtlich der Reihenfolge der Arbeitsgänge bezüglich des Befüllens mit Gas und/oder Arbeitsflüssigkeit. Weiterhin ist der Erfindungsgegenstand und das beschriebene Verfahren zum Zusammenbau auch für Schwingungsdämpfer geeignet, bei denen sich das Dichtungs- und Führungspaket 11 nur über einen in einer Nut 14 liegenden Federring 12 axial nach außen abstützt.

### Bezugszeichenliste

- 1.: Anschlagteil
- 2.: Außenzylinder
- 3.: Kolbenstange
- 4.: Dämpferkolben
- 5.: Arbeitsraum
- 6.: Arbeitsraum
- 7.: Ausgleichsraum
- 8.: Trennkolben
- 9.: Innenmantel
- 10.: Boden
- 11.: Dichtungs- und Führungspaket
- 12.: Federring
- 13.: Federring
- 14.: Nut
- 15.: Nut
- 16.: Außenmantel
- 17.: Ende
- 18.: Oberwerkzeug
- 19.: Stempel
- 20.: Dichtung
- 21.: Rücksprung
- 22.: Dichtkappe

## Patentansprüche

1. Hydraulischer Schwingungsdämpfer für Kraftfahrzeuge mit einem Dämpfungsflüssigkeit enthaltenden und alternativ zusätzlich einen mit Gas gefüllten und mittels eines Trennkolbens (8) abgetrennten Ausgleichsraum (7) enthaltenden Außenzylinder (2), in dem direkt oder in einem innenliegenden Dämpferzylinder ein Dämpferkolben (4) axial gleitend geführt ist, mit einer den Dämpferkolben (4) tragenden und axial bewegenden Kolbenstange (3), die sich durch ein axial offenes Ende (17) des Außenzylinders (2) nach außen erstreckt und mit einem den Außenzylinder (2) gegenüber der Kolbenstange (3) gleitend verschließenden Dichtungs- und Führungspaket (11), wobei das Dichtungs- und Führungspaket (11) sich axial nach außen gegen einen in einer Nut (14) des Außenzylinders (2) liegenden Federring (12) abstützt, **dadurch gekennzeichnet,** daß die den außenliegenden Federring (12) aufnehmende radial im Außenzylinder (2) angeordnete Nut (14) axial zum Ende (17) des Außenzylinders (2) hin entsprechend der Form des Federringes (12) ausgebildet ist und sich in entgegengesetzter axialer Richtung konusartig zum Innenmantel (9) des Außenzylinders (2) hin verjüngt.

2. Hydraulischer Schwingungsdämpfer nach Anspruch 1, **dadurch gekennzeichnet,** daß unterhalb des Dichtungs- und Führungspakets (11) zum Innenraum des Außenzylinders (2) hin in diesen eine weitere, einen Federring (13) aufnehmende, sich radial nach außen erstreckende Nut (15) angeordnet ist.

3. Hydraulischer Schwingungsdämpfer nach Anspruch 2, **dadurch gekennzeichnet,** daß die Form der weiteren Nut (15) der Form der äußeren Nut (14) entspricht.

4. Hydraulischer Schwingungsdämpfer nach einem oder mehreren der Ansprüche 1 bis 3, **dadurch gekennzeichnet,** daß am äußeren Ende des Dichtungs- und Führungspakets (11) ein radialer Rücksprung (21) mit etwa der halben Dicke des Federringes (12) angeordnet ist.

5. Hydraulischer Schwingungsdämpfer nach einem oder mehreren der Ansprüche 1 bis 4, **dadurch gekennzeichnet,** daß wenigstens einer der Federringe (12, 13) einen kreisförmigen Querschnitt aufweist.

6. Hydraulischer Schwingungsdämpfer nach einem der Ansprüche 2 bis 5, **dadurch gekennzeichnet,** daß die beiden Nuten (14, 15) einen Abstand voneinander aufweisen, der wenigstens der Höhe des Dichtungs- und Führungspaketes (11) plus der Dicke eines der Federringe (14 oder 15) entspricht.

7. Verfahren zum Zusammenbau eines hydraulischen Schwingungsdämpfers nach einem oder mehreren der Ansprüche 1 bis 6, wobei auf die Öffnung des Außenzylinders (2) ein Oberwerkzeug (18) zur Aufnahme und zum Halten der Einbauteile aufgesetzt wird und wobei Vorrichtungen und Maschinen zum Einfüllen von Gas und/oder Dämpfungsflüssigkeit und ein Stempel (19) zum Einpressen der Einbauteile mit dem Oberwerkzeug (18) zusammenwirken, **dadurch gekennzeichnet,** daß nach oder während dem Füllen des Außenzylinders (2) mit Dämpfungsflüssigkeit sämtliche Einbauteile einschließlich des Dämpfungskolbens (4) und der Federringe (12, 13) in den Außenzylinder (2) und/oder den Dämpferzylinder eingeschoben werden.

8. Verfahren nach Anspruch 7, **dadurch gekennzeichnet,** daß zum Zusammenbau eines Einrohr-Schwingungsdämpfers an einer Arbeitsstation mit einem Oberwerkzeug 18, in dem alle Einbauteile liegen, unterhalb des Trennkolbens (8) Gas eingefüllt wird, danach oberhalb des Trennkolbens (8) Dämpfungsflüssigkeit eingefüllt wird und danach die Einbauteile einschließlich der Federringe (12, 13) in den Außenzylinder (2) eingeschoben werden.
